# EUROPEAN PATENT SPECIFICATION

(11) **EP 4 381 184 B1**
(45) Date of publication and mention of the grant of the patent: **16.09.2026**
(21) Application number: 22754781.7
(22) Date of filing: 28.07.2022
(51) Int. Cl.: F02C 7/22, F02C 7/232

(54) **IMPROVED METHOD FOR ESTIMATING AND SETTING EXHAUST PURGE TIME IN A COMBUSTION SYSTEM AND COMBUSTION SYSTEM THEREOF**
VERBESSERTES VERFAHREN ZUR SCHÄTZUNG UND EINSTELLUNG DER ABGASSPÜLZEIT IN EINEM VERBRENNUNGSSYSTEM UND VERBRENNUNGSSYSTEM DAFÜR
PROCÉDÉ AMÉLIORÉ D'ESTIMATION ET DE RÉGLAGE DU TEMPS DE PURGE D'ÉCHAPPEMENT DANS UN SYSTÈME DE COMBUSTION ET SYSTÈME DE COMBUSTION ASSOCIÉ

(30) Priority: 04.08.2021 IT 202100021071
(43) Date of publication of application: 12.06.2024
(73) Proprietor: NUOVO PIGNONE TECNOLOGIE - S.R.L., 50127 Florence (IT)
(72) Inventor: OUARTIERI, Eugenio, 50127 Florence (IT); TONNO, Giovanni, 50127 Florence (IT)
(74) Representative: Novagraaf Group
(86) International application number: PCT/EP2022/025359
(87) International publication number: WO 2023/011763

(56) References cited:
- US-A1- 2012 240 591
- US-A1- 2020 141 321
- US-B2- 10 082 091
- JAMES DICAMPLI: "Combined Heat and Power: Gas Turbine Operational Flexibility", PROCEEDINGS OF THE ASME TURBO EXPO: TURBINE TECHNICAL CONFERENCE AND EXPOSITION - 2013 : PRESENTED AT THE 2013 ASME TURBO EXPO: TURBINE TECHNICAL CONFERENCE AND EXPOSITION; JUNE 3 - 7, 2013, SAN ANTONIO, TEXAS, USAVOLUME 4: CERAMICS; CONCENTRATING S, vol. 4, 3 June 2013 (2013-06-03) - 7 June 2013 (2013-06-07), US, pages - 1, XP055591602, ISBN: 978-0-7918-5518-8, DOI: 10.1115/GT2013-94467

## Description

### TECHNICAL FIELD

The present disclosure concerns a method for estimating and setting exhaust purge time in a combustion system, in particular in a combustion system comprising a gas turbine. A combustion system for performing such a method is also herein disclosed.

### BACKGROUND ART

Combustion systems comprising gas turbines and the exhaust ducts thereof, need to be purged from residual gases before starting-up or re-starting the turbine since residual gases or vapors can create an explosive atmosphere into the system. US 2012/240591 A1 discloses shutting down a generator to prepare it for restart by forcing a purge gas into a gas turbine to extinguish a combustion flame upon initiation of a power down sequence.

There are safety standards that prescribe how to carry out purge cycles in such gas turbine exhaust systems, namely: API616, ISO21789, ISO3977-3, NFPA37, and NFPA85. Specifically, all the mentioned standards prescribe that before starting up the gas turbine, a purge cycle should generally be included and carried out. Usually, during such purge cycle, at least three complete volume changes of the gas turbine and the downstream exhaust ducts are undertaken.

Both the ISO21789 and NFPA85 standards introduce also the possibility that such a complete purge cycle may be avoided in case alternative safety measures are in place. In particular, the NFPA85 standard introduces the concept of purge credit.

However, either such concept of risk assessment allowed by the lSO21789 and NFPA85 standards, or the purge credit introduced by the NFPA85 standard has never been thoroughly analyzed. In fact, the current approach undertaken by most manufacturers is conservative, wherein the purge cycle cannot be less than 5 times the exhaust volume (maximum number defined by the NFPA85 standard). The volume to be purged is considered to be up to the exit of the exhaust duct (including the vertical parts), and the purge cycle is always carried out at each gas turbine start or re-start.

However, such a conservative approach, although effective in terms of security, may affect the availability of the combustion system, since it may require long times to be carried out, with a consequent long gas-turbine start-up.

This can lead to a delay in the turbine networking (in case of a turbo generator) and an overload of some auxiliary systems, such as the starter, which would require a specific design for prolonged operating times. This implies an increase in production costs.

By way of example, in case of a combustion system comprising a gas turbine with high exhaust volume, and wherein a recovery boiler is also installed in line, the purge time for completing five volume changes in the downstream ducts can last about 96 minutes. Such value is also dependent on the dimensions of the exhaust ducts.

On the basis of the above, an improved method for setting exhaust purge time in combustion systems, able to reduce the operating time during the turbine start-up, would be welcomed in the industry, allowing to increase the gas turbine availability, as well as to reduce the related operating costs.

### SUMMARY

The present invention is defined in the accompanying claims. In one aspect, the subject matter disclosed herein is directed to a method for estimating and setting exhaust purge time in combustion systems. The method comprises a turbine, in particular a gas turbine, fed with fuel gas by a fuel gas compartment provided with shut-off valves. Specifically, the fuel gas compartment comprises a fuel gas inlet, for fuel gas entering the combustion system; a first internal shut-off valve arranged downstream the fuel gas inlet, with reference to the movement of fuel gases to the turbine, when in use, and a second internal shut-off valve arranged downstream the first internal shut-off valve. At least one pressure detector is arranged between the first internal shut-off valve and the second internal shut-off valve. The method according to such aspect comprises the steps of starting-up the turbine and checking the first internal shut-off valve and the second internal shut-off valve, by receiving the pressure detected by at least one pressure detector and verifying that no leakage is detected. If the checking is completed and if the turbine has been shut down at least once, then at least one variable is read. In particular, at least one variable is associated with the previous turbine shut-down and indicates if a purge credit is available. Therefore, if the at least one variable indicates that a purge credit is available, then the exhaust purge time is set to zero, which means that the next purge cycle is skipped. Else, if the at least one variable indicates that no purge credit is available, then the exhaust purge time is set to a predetermined purge time value.

In particular, the purge cycle may be skipped a finite number of times if a purge credit is available. In other words, the mentioned method allows to assess whether the system has residual purge credits, thus enabling to starting-up the turbine without a purge cycle.

If the at least one variable indicates that no purge credit is available and that the previous shutdown was a normal shutdown, then the predetermined purge time value is set to a first time to reduce residual exhaust gases inside the combustion system below a safety threshold, wherein the residual exhaust gases are assumed to be equal to a first predetermined gas volume. On the other hand, if the at least one variable indicates that the previous shutdown was not a normal shutdown, then the predetermined purge time is set to a second time to reduce residual exhaust gases inside the combustion system below a safety threshold, wherein the residual exhaust gases are assumed to be equal to a second predetermined gas volume.

According to an aspect, the checking can be carried out by pressurizing, by means of fuel gas entering in the fuel gas compartment from the fuel gas inlet, a first volume of the fuel gas compartment between the fuel gas inlet and the first shut-off valve, while the first shut-off valve is closed, and verifying that the pressure detected by the at least one pressure detector does not increase above a first pressure limit. After such pressurization of the first volume, the first shut-off valve can be opened while the second shut-off valve can be closed. Subsequently, the first shut-off valve can be reclosed and a predetermined time can be waited to verify that the pressure detected by the at least one pressure detector does not go below a predefined leakage threshold.

According to one aspect, the at least one variable can be calculated during the turbine previous shutdown. In particular, when the turbine is shutting down, the first shut-off valve and the second shut-off valve may be closed and a signal related to loss of flame may be received before or after the closure of the first shut-off valve and the second shut-off valve. If the signal related to loss of flame arrives after closing the first shut-off valve and the second shut-off valve, then the residual fuel-gas inside a second volume of the fuel-gas compartment is checked. Such second volume is downstream the first shut-off valve and upstream the second shut-off valve. In particular, if the checked residual fuel-gas is below a predefined value, then a value indicating that a purge credit is available can be assigned to the at least one variable. On the other hand, if the checked residual fuel-gas is not below the predefined value, then a value indicating that no purge credit is available and that the shutdown was normal can be assigned to the at least one variable. Finally, if the signal related to loss of flame arrives before the closure of the first shut-off valve and the second shut-off valve, then a value indicating that no purge credit is available and that the shutdown was not normal can be assigned to the at least one variable.

According to an aspect, if a predetermined time passed without a purge, the method can assign to the at least one variable a value indicating that no purge credit is available at the next turbine start-up.

According to an aspect, the subject matter disclosed herein is also directed to a combustion system comprising a control unit configured for executing the method, a turbine, in particular a gas turbine, connected to the control unit, and a fuel-gas compartment coupled with the turbine by for feeding the turbine with fuel gas and being connected to the control unit. In particular, the fuel gas compartment comprises: a fuel gas inlet for fuel gas entering the combustion system; a first internal shut-off valve, arranged downstream the fuel gas inlet, with reference to the movement of the fuel gas to the turbine, and connected to the control unit; a second internal shut-off valve arranged downstream the first shut-off valve and connected to the control unit; and at least one pressure detector is arranged between the first internal shut-off valve and the second internal shut-off valve.

### DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings and examples, wherein:
Fig. 1 shows a front view of a first embodiment of a combustion system according to one aspect of the present invention, wherein the combustion system comprises a gas turbine and a fuel gas compartment for feeding the gas turbine with fuel gas;
Fig. 2 shows a front view of a second embodiment of a combustion system according to one aspect of the present invention, wherein the combustion system comprises a gas turbine and a fuel gas compartment for feeding the gas turbine with fuel gas;
Fig. 3 shows a block diagram of a fuel gas compartment of a combustion system according to one aspect of the present invention;
Fig. 4 shows a block diagram of a control unit of a combustion system according to one aspect of the present invention;
Fig. 5 shows a flowchart of a method according to one aspect of the present invention, wherein the flowchart comprises the steps of turbine start-up, valves check and purge time estimate in a combustion system according to one aspect of the present invention;
Fig. 6 shows a flowchart exploring the valves check step of the flowchart of Fig. 1; and
Fig. 7 shows a flowchart of a method according to one aspect of the present invention, wherein the flowchart comprises the steps for checking the turbine shut-down in a combustion system.

### DETAILED DESCRIPTION OF EMBODIMENTS

A gas turbine is a rotating machine capable of transforming chemical energy, namely a chemical fuel, into mechanical energy for operating a load or producing electrical energy. Gas turbines are implemented for several services, from driving mechanical loads, to producing electrical energy. Because of the combustion happening into the gas turbines, the pipes connected to the gas turbine need to be purged at regular intervals for security reasons, more specifically for preventing possible explosions. However, this maintenance causes several downtimes and the break of the services provided by the gas turbines. Therefore, a reduction of the required purge times would be valuable.

A new combustion system is disclosed, which is operated for estimating whether a purge cycle is needed or not, based on pressure values collected by pressure detectors arranged upstream the combustion stage of the gas turbine, and in particular within the fuel-gas compartment, which feeds the turbine itself. By the solution, the purging step is carried out only when needed, and not necessarily at each gas-turbine stat-up, keeping the same safety levels.

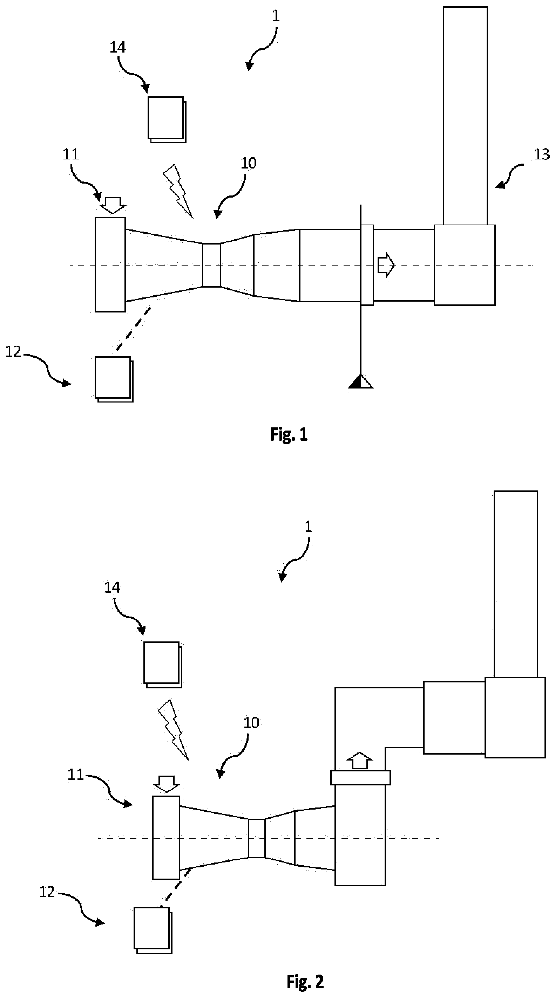

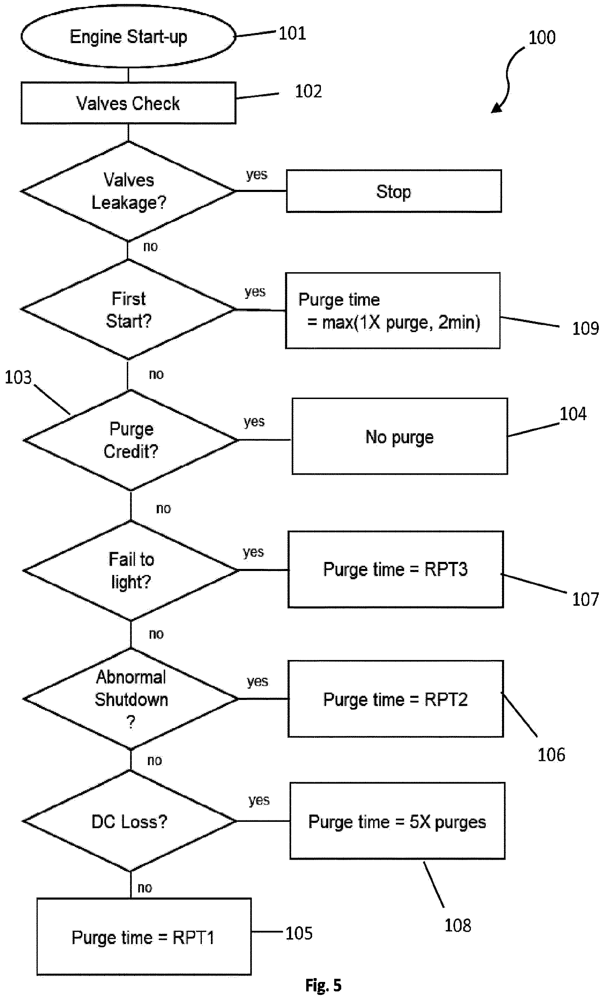

With references to Figs. 1, 2, 3, 4, 5, 6, and 7, is herewith described a combustion system 1 (shown in particular in Figs. 1, and 2) configured for carrying out a method 100, which is shown in Figs. 5, 6, and 7. The method 100 estimates and sets the exhaust purge time in the combustion system 1 itself.

The combustion system 1 comprises a gas turbine 10, and a fuel gas compartment 11, coupled with the turbine 10. In some embodiments, the gas-turbine 10 is fastened to the fuel gas compartment 11. In some other embodiments, the gas-turbine 10 is integrally formed with the fuel gas compartment 11. When in use, the fuel gas compartment feeds the turbine 10 with fuel-gas.

The combustion system 1 comprises also an exhaust compartment 13, coupled with the gas-turbine 10. In some embodiments, the exhaust compartment 13 may be fastened to the turbine 10. When in use, the exhaust compartment 13 receives the exhaust gases of the turbine 10, so as to extract such exhaust gases produced by the combustion into the gas-turbine 10.

Finally, the combustion system 1 comprises a control unit 14 connected to the turbine 10 and to the fuel gas compartment 11. The control unit 14 can be installed in a casing close to the gas-turbine 10, or in a remote location, as it is shown in Figs. 1 and 2, connected to the gas turbine 10 through communication channels, such as In-ternet, ethernet cables, and the like.

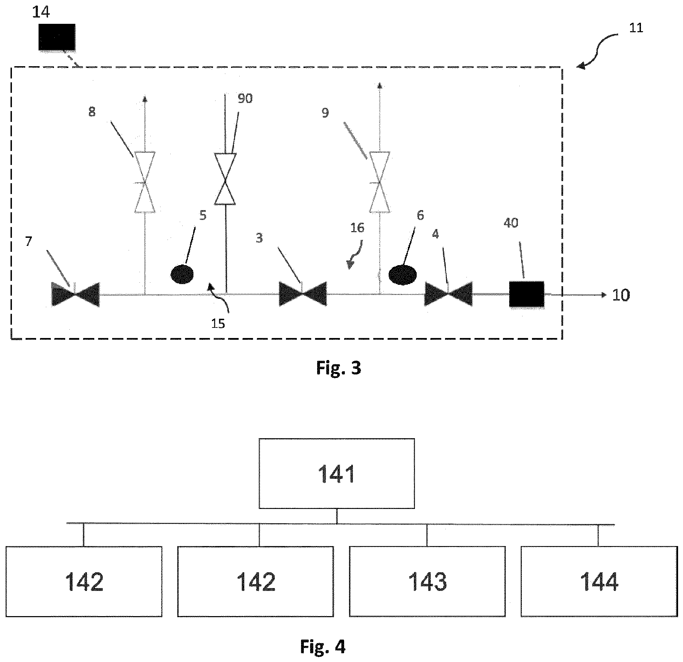

Referring to Fig. 4, an embodiment of the control unit 14 is illustrated, comprising a bus 141, a processor 142, connected to the bus 141, a computer readable memory 143, connected to the bus 141, for storing data and any possible required program, and input/output port 144, configured to connect to an electrical interface of the gas-turbine 10 of the combustion system 1, to control it.

Also, the computer readable memory 143 stores a computer readable code, that when accessed by the processor 142, causes the processor 142 to execute a program for carrying to the method 100 as better detailed below.

In some embodiments, the processor 142 can be a safety PLC. One example is the 3701/55 ADAPT ESD from Baker Hughes. In addition, the processor 142 can be also of different programmable types.

The fuel gas compartment 11 can be isolated from any other compartment of the combustion system 1. In fact, the combustion system 1 comprises a filter house 12 for feeding the turbine 10 with outer air. The filter house 12 is arranged in a safe area, which means that it is arranged in an area in which the fuel gases cannot enter. Thanks to this layout of the combustion system 1, the only way for the fuel gases entering the turbine 10 is through the fuel gas compartment 11, which is isolated during all commissioning activities.

Specifically, the fuel gas compartment 11 (shown in Fig. 3) comprises a fuel gas inlet 7, through which fuel gas may enter the combustion system 1. The fuel gas compartment 11 comprises, also, a first internal shut-off valve 3, arranged downstream the fuel gas inlet 7, with reference to the movement of fuel gas to the turbine 10, when in use, and a second internal shut-off valve 4, arranged downstream the first internal shut-off valve 3.

Furthermore, a first pressure detector 5 is arranged upstream the first internal shut-off valve 3, and a second pressure detector 6 is arranged between the first internal shut-off valve 3 and the second internal shut-off valve 4.

The second pressure detector 6 is preferably Safety Integrity Level (SIL) certified, and it is connected to the control unit 14, for instance being hardwired to the safety PLC, to ensure greater safety of combustion system 1. Other connection systems can be however foreseen for the connection between the pressure detector 6 and the control unit 14.

The fuel gas inlet 7 shown in Fig. 3 is an external shut off valve 7. Therefore, the fuel gas compartment 11 can be divided in a first volume 15, between the external shut off valve 7 and the first internal shut-off valve 3, and a second volume 16, between the first internal shut-off valve 3 and the second internal shut-off valve 4.

Finally, the fuel gas compartment 11 comprises an external vent valve 8, arranged in the first volume 15, and an internal vent valve 9, arranged in the second volume 16. The external vent valve 8 and the internal vent valve 9 allow the depressurization of the second volume 16, when needed, as better explained below. The fuel gas compartment 11 comprises also a warm-up valve 90, also for allowing the depressurization of the first volume 15.

There are also metering valves 40 arranged downstream the second internal shut-off valve 4 and upstream the gas turbine 10 for measuring the flow gas towards the turbine 10. A feedback of the metering valves 40 is connected to the control unit 14, preferably being hardwired to the safety PLC, for improving the combustion system 1 safety. Further hardware that may be installed downstream the second internal shut off valve 4 is not considered for the purpose of this disclosure.

Thanks to the second pressure detector 6, it is possible to evaluate, by means of the computer method 100 executed by the control unit 14, if a purge is needed before the turbine 10 start-up, and the time required for such purge, as better disclosed below.

The exhaust compartment 13 comprises a vertical duct and one or more horizontal ducts (as shown in Figs. 1 and 2). Due to the isolation of the fuel gas compartment 11 during commissioning activities, there is no credible scenario that fuel gas can enter inside the exhaust compartment 13. For this reason, it is reasonably assumed that the exhaust compartment 13 is free of fuel gas when the fuel gas compartment 11 will be on service for the first time.

As mentioned above, the method 100 for estimating and setting the value RPT1, RPT2, RPT3 of the purge time in the combustion system 1 comprises the steps shown in Fig. 5.

At step 101, the gas-turbine 10 starts-up and then a checking 102 step of the first internal shut-off valve 3 and the second internal shut-off valve 4 is carried out. The checking step 102 is executed by receiving the pressure detected by the second pressure detector 6 and by verifying that no leakage is detected.

Subsequently, if the checking step 102 is completed and if the gas-turbine 10 has been shut down at least once, the method 100 comprises the step of reading 103 at least one variable V, associated with the previous shutdown and which indicates if a purge credit is available. If the at least one variable V indicates that a purge credit is available, then the step of setting 104 the exhaust purge time to zero is carried out; else, if the at least one variable V indicates that no purge credit is available, then the method 100 comprises the steps of setting (see reference numbers 105, 106, 108) the exhaust purge time to a predetermined purge time value RPT1, RPT2, RPT3.

The at least one variable V may be also the purge time value RPT1, RPT2, RPT3 to be set, which has been estimated during the latest gas turbine 10 shut-down.

The method 100 is also designed to check additional permissive before moving to crank ("START PASSED").

In fact, during the checking 102, a full stroke test is performed on the metering valves 40, to check their functionality. A first test is performed by moving valves with 5% stroke/sec rate, from fully close to fully open and *viceversa.* This valve check can be executed on all the metering valves 40 at the same time. During this step, a valve driver may generate trip as per its proper parametrization (i.e.: manufacturer settings). As part of this test, a basic process safety control system (BPCS, being part of control unit 14) will command the metering valves 40 while the safety PLC shall perform a "demand vs feedback" check on the metering valves 40. The valve/s feedback is directly wired to Safety PLC. The demand shall be shared to Safety PLC from BPCS. If test is passed the method 100 proceeds with its further steps. Else, the control unit 14 raises a specific alarm and gas turbine 10 start-up 101 is aborted if there is a mismatch above a predefined threshold. As a way of example, the start-up 101 of the gas turbine 10 may be aborted if there is a mismatch higher than 3% for more than 0.5 seconds.

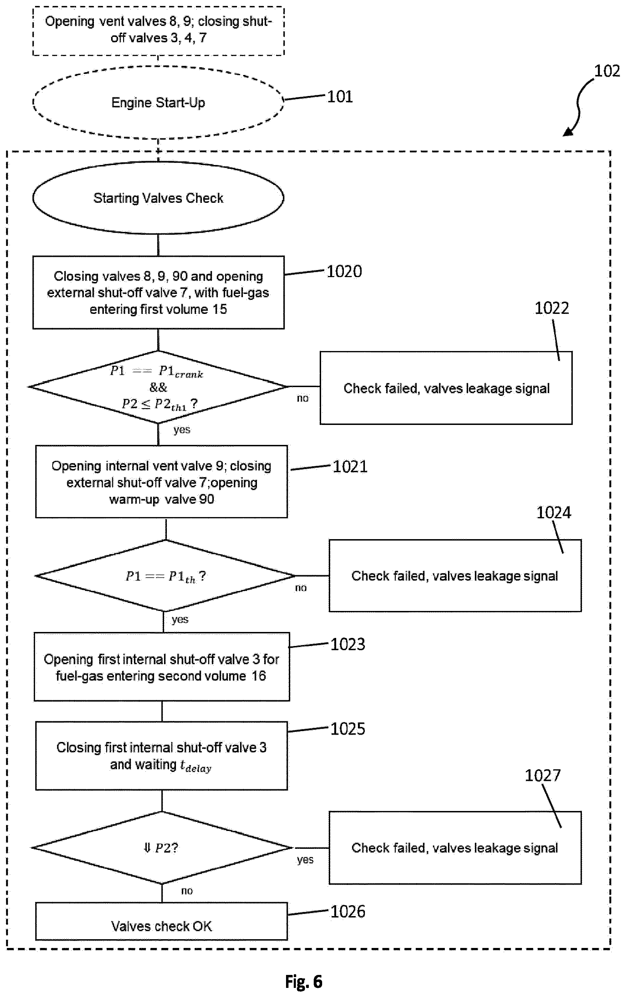

Furthermore, during the checking 102 a bottle test (shown in Fig. 6) is performed on the first shut-off internal valve 3 and on the second shut-off internal valve 4, as explained below.

In order to perform such bottle test, before the starting up 101 of gas-turbine 10, i.e., while the gas turbine 10 is in standstill condition (shutdown state), the external vent valve 8 and the internal vent valve 9 or the warm-up valve 90 and the internal vent valve 9 are moved in open condition while the shutoff valves (external shut-off valve 7, first internal shut-off valve 3 and second internal shut-off valve 4) are in closed condition. No other checks are foreseen for this phase/condition and no safety checks shall be performed. This condition is before gas-turbine start-up.

After the starting up 101 of gas-turbine 10, the valve-checking step 102 has initiated, and the external shut-off valve 7 opens to pressurize first volume 15, while external vent valve 8 and internal vent 9 remain closed (step 1020 of Fig. 6). All the other valves 3, 4 remain in the same condition as before. This is before crank.

In this step, when pressure measured by the first pressure sensor 5 reaches the same threshold for permissive to crank *P1_{crank},* there is a check on the second pressure sensor 6 instrument, in order to monitor if the second pressure values P2 detected goes beyond a pressure limit *P2ₜₕ₁*. Such monitoring is performed for a predetermined amount of time.

The control unit 14 raises a specific alarm and the gas turbine start-up is aborted if the second pressure sensor 6 detects high pressure, as shown in step 1022 of Fig. 6. By high pressure in the present technical context, it is meant greater than *P2ₜₕ₁.*

Instead, if the internal vent valve 9 opens (first part of step 1021 in Fig. 6) and it is possible to proceed with a standard sequence for the fuel-gas warm-up.

Specifically, after the above-mentioned steps 1020, 1021 have been successfully completed, during acceleration to crank speed, when the gas turbine 10 is no more at "zero speed", the external shut-off valve 7 closes. At the same time, a depressurization step 1021 can be carried out for depressurizing the first volume 15 by opening the warm-up valve 90 until the first pressure detector 5 detects a first pressure value *P*1 inside the first volume 15 equal to a predetermined pressure *P1ₜₕ.*

A maximum duration time control for depressurizing 1021 the first volume 15 can be provided to the control unit 14, in order to verify that the predetermined pressure *P1ₜₕ* is achieved in a predetermined amount of time.

The control unit 14 raises a specific alarm and gas turbine 10 start-up 101 is aborted in case such predetermined pressure *P1ₜₕ* is not achieved (step 1024 of Fig. 6).

After the first volume 15 depressurization 1021 is successfully completed and with the gas turbine 10 at purge speed, the first shut-off valve 3 is commanded open for a fixed time for pressurizing 1023 the second volume 16 volume and to check on skid double block and bleed leakage. After the first shut-off valve 3 "open command" 1023 resets, a leakage test can start after a time delay *t_{delay},* preferably set equal to 1 second. This time delay *t_{delay}* is intended to enable leakage verification once the pressure at the second pressure detector 6 has been detected.

Specifically, after a second pressure value P2 is detected at the second pressure detector 6, a further test can be performed that consists into monitoring such second pressure value P2 and comparing the actual depressurization detected with a theoretical leakage curve. This verification lasts a predetermined amount of time. If the actual depressurization goes below a predefined leakage threshold of the theoretical leakage curve, the valves check test 102 has failed (step 1027 of Fig. 6). In such case, the control unit 14 raises a specific alarm and gas turbine 10 starting up 101 is aborted for initiating a post-purge sequence in case of on-skid double block and bleed valves leaking detection. Otherwise, the valves checking 102 is completed (step 1026 of Fig. 6) and the method 100 moves to the further steps 103-105 for estimating and setting the purge time. Other valves, not mentioned in current paragraphs, remain at the same initial condition.

In summary, the valves-checking step 102 described above comprises at least the sub-step of pressurizing 1020, by means of fuel gas entering in the fuel gas compartment 11 from the fuel gas inlet 7, the first volume 15, while the first shut-off valve 3 is closed, and verifying that the pressure P2 detected by the second pressure detector 6 does not increase above a pressure limit *P2ₜₕ₁.*

After the pressurization 1020 sub-step, the first shut-off valve 3 is opened (sub-step 1023), while the second shut-off valve 4 is closed. After the opening (sub-step1023) is completed, the first shut-off valve 3 is closed 1025, and a predetermined time should pass, after which it can be verified that the pressure P2 detected by the second pressure detector 6 does not go below a predefined leakage threshold, in particular a theoretical leakage curve.

Specifically, before the closing 1025 sub-step and after the opening 1023 sub-step, the first volume 15 can be depressurized in the depressurization step 1021 by opening the external vent valve 8 or the warm-up valve 90 until the first pressure detector 5 detects a predefined intermediate pressure *P1ₜₕ.*

Therefore, the checking step 102 checks if the pressure detected within the fuel gas compartment 11 is within an operating pressure interval, i.e. between *P1ₜₕ* and *P2ₜₕ₁.*

In case it is detected that the first internal shutoff valve 3 is leaking, for example with a class IV leakage, the next turbine startup will require a purge. In this case, the purge time can be estimated as a function of residual exhaust gases inside combustion system 1, wherein the residual exhaust gases are assumed to be equal to a first predefined gas volume. Specifically, such predefined gas volume may be estimated by assuming that the worst scenario happened, i.e. the first internal shut-off valve 3 was leaking while the second internal shut-off valve 4 and the internal vent valve 9 were completely open. The function of such estimated residual gases may estimate the time needed to clean a volume of the combustions system 1 so as to reach a level of estimated residual gases below 25% of the lower explosive limit (LEL).

In case it is detected that the second internal shutoff valve 4 is leaking, the next purge time may also be estimated in a similar manner. However, in such a scenario, the predefined gas volume may be estimated by assuming the two internal shut-off valves 3, 4 opened during the trip.

Furthermore, after the valves checking step 102, the method 100 is configured for estimating the purge time value RPT1, RPT2, RPT3 to be set for the purge, with the following steps.

If it is the first gas-turbine 10 start-up, the purge time value RPT1. RPT2, RPT3 is set 109 to a value equal to the maximum between a minimum time value and the time needed for insufflating a volume of air equal to an estimated volume of the combustion system 1. A first gas-turbine 10 start-up means the first starting up 101 of gas-turbine 10 after the combustion system 1 has been installed at the site, with the gas-turbine 10 coupled to the exhaust compartment 13. In this case, no previous shut-down data are available.

The minimum time value set 109 at the first gas-turbine startup is preferably equal to 2min, while the estimated volume of the combustion system 1 is equal at least to the volume of the exhaust compartment 13, as discussed below. The rationale behind such first estimated purge time is that during the commissioning, the exhaust ducts of the exhaust compartment 13 are filled with air (no fuel gas could enter inside them), the filter house 12 is installed in a safe area and the fuel gas system can be mechanically intercepted (with spectacle blind or manual valve up to the first fire). If the previous hypotheses do not apply, a complete purge with the insufflation of a volume of air equal to five times the estimated volumes of the combustion system 1 shall be done. After the first gas-turbine 10 exhaust purge, the following purges time values RPT1, RPT2, RPT3 will be calculated as follow. In all cases, the estimated purge time values RPT1, RPT2, RPT3 are preferably not less than 2 minutes, for ensuring the safety of the combustion system 1.

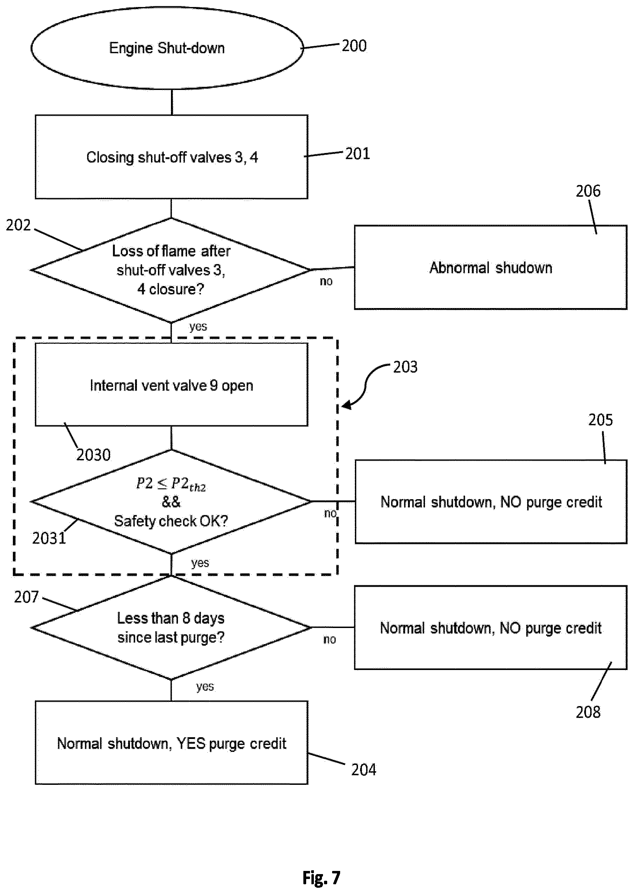

As mentioned, the method 100 set the purge time value RPT1, RPT2, RPT3 on the basis of information related to the previous shutdown. Specifically, the control unit 14 reads 103 at least one variable V associated with the previous shutdown and which indicates if a purge credit is available. The purge credit is available only if the previous gas-turbine 10 shutdown has been a normal shutdown. Following the definition of turbine normal shutdown given by NFP85 standard, this is the normal sequence of events that automatically provides successful shutdown of the gas turbine 10 with no abnormal conditions in the combustion system 1. Therefore, there are two possible scenarios. In a first scenario, a normal shutdown 200 has happened, which could be any normal stop or ES/ESN when the loss of flame is subsequent to the closure 201 of the first internal shut-off valve 3 and the second internal shut-off valve 4 of the and no anomalies in the fuel gas compartment is detected (see Fig. 7). In a second scenario, an abnormal shutdown 200 has happened, with loss of flame before closure 201 of the first internal shut-off valve 3 and the second internal shut-off valve 4 or other anomalies in the fuel gas compartment 11 may have been detected.

As already stated, an gas-turbine 10 normal shutdown 200 will happen when the signal of loss of flame arrives after the closure 201 of the first internal shut-off valve 3 and the second internal shut-off valve 4 switches. Those signals shall be evaluated by the control unit 14, preferably by the safety PLC. When a normal shutdown is detected, it is assumed that no unburned fuel gas entered inside the exhaust compartment 13 and specifically in the exhaust ducts.

The following sequence 203 and checks can therefore be carried out to achieve a purge credit.

After the loss of flame, with the two internal shut-off valves 3, 4 closed (confirmed by the two limit switches) the internal vent valve 9 opens 2030 to depressurize the second volume 16 up to a predetermined pressure, preferably equal to 0.3 barG. At this value, the internal vent valve 9 can be closed again to check if there is a leakage in the first shut-off valve 3 by reading the second pressure P2 detected by the second pressure detector, and verifying 2031 that it does not exceed a second pressure limit *P2ₜₕ₂.* Such monitoring is performed for a predetermined amount of time. If the second pressure P2 is greater than the second pressure limit *P2ₜₕ₂,* then the control unit 14 raises 205 a specific alarm and credit purge is lost. In such an event, the combustion system 1 may be checked in order to verify that the time needed to depressurize the volume is less than the time needed to go below the crank speed in case of a gas turbine 10 shutdown. If this is not the case, such time can be reduced with the help of a user, in particular an engineer.

After the step of verifying 2031 the pressure inside second volume 16 is completed, the internal vent valve 9 is opened.

The following data can be monitored by the control unit 14, in particular the safety PLC 14 up top 2 hours after loss of flame:
- closure limit switches for first shut-off valve 3 and second shut-off valve 4 is reached and maintained (or virtual limit switch);
- the open limit switch of internal vent valve 9 is reached and maintained (or virtual limit switch);
- P2 is less than second pressure limit *P2ₜₕ₂,* in particular 0.3 barG;
- the gas pressure at the fuel gas inlet 7 *GPI* is lower than 0.3 barG (this data can be verified by at a unit control panel connected to the control unit 14 and not in the safety PLC).

If all the above conditions are satisfied, the control unit 14 sets 204 the predetermined variable V to a value which indicates that the last shutdown was a normal shutdown and that a credit purge is available. Such credit purge may be set to last up to a predetermined time limit. It was discovered that 8 days was the optimal time limit to optimize the gas turbine 10 availability, while ensuring the safety of combustion system 1. This means that if the gas turbine 10 will start within 8 days from the previous shutdown, no exhaust purge shall be done.

Therefore, the at least one variable V may comprise a time counter, which is set to a first predetermined value after the turbine 10 shutdown indicates that a purge credit is available, if the turbine 10 shutdown follows a purge cycle, wherein the time counter changes in time and, when the time counter is equal to the predetermined time limit, the control unit 14 assigns 208 a first value to the at least one variable V, indicating that no purge credit is available at the next turbine 10 start-up. Such a time counter may be configured to go from 8 days to 0.

It is therefore important that the timer memory is retained. In case of timer memory loss (DC loss) a complete purge, for example by insufflating an amount of air equal to five times the exhaust compartment 13 volumes, should be carried out. In other words, if combustion system 1 is affected by memory loss, then the at least one variable V is set to a value, which indicates that no purge credit is available and the exhaust purge time is estimated as a predetermined maximum purge time value, in particular the time needed to complete five volumes exchanges of at least the exhaust compartment 13.

If at least one of the conditions monitored by the control unit 14 during the gas-turbine shutdown 200 are not met, the control unit 14 sets 205 the predetermined variable V to a value which indicates that the last shutdown was a normal shutdown, but that a credit purge is not available due to abnormalities detected in the fuel gas compartment 11.

Both when the purge credit is not available anymore because the predetermined time limit has lapsed, and when at least one of the conditions by the control unit 14 during the gas-turbine shutdown 200 are not met, the purge time is set 105 to be equal to a predetermined first value RPT1, the function of the estimated residual exhaust gases inside combustion system 1, wherein the residual exhaust gases are assumed to be equal to a predefined gas volume. In particular, the value RPT1 may be calculated as the time needed to lower the amount of estimated residual exhaust gases inside the combustion system 1 below a predefined safety threshold, preferably equal to 25% of the lower explosive limit (LEL).

Therefore, the enhanced purge time philosophy carried out by the method 100 detailed above, guarantees that the maximum quantity of fuel gas potentially present in the exhaust compartment 13 will be always equal or lower than the safety threshold, which is preferably equal 25%, as required by NFPA69 standard.

This condition can be monitored and assured by monitoring the pressure P2 detected at the second pressure detector 6 and verifying it is below a certain second pressure limit *P2ₜₕ₂* during the crank phase. This second pressure limit *P2ₜₕ₂* is not active during the valves check-up 102 and in case a step with a layer for protection analysis (LOPA).

Therefore, if during the crank time the pressure measured by the second pressure detector 6 remains below the second pressure limit *P2ₜₕ₂,* the sequence could proceed for fire; otherwise, the sequence shall be aborted, the external shut-off valve 7, the first internal shut-off valve 3 and the second internal shut-off valve 4 being closed, and the external vent valve 8 (or the warm-up valve 90) and the internal vent valve 9 is open, with the control unit 14 raising a specific alarm.

In this case, the purge time value RPT1, RPT2, RPT3 needed for the next purge may be calculated as the time needed to lower the amount of estimated residual exhaust gases inside the combustion system 1 below the predefined safety threshold, wherein such estimated residual exhaust gases may be calculated by assuming the worst condition happened, i.e. the first internal shut off valve 3 opens while the second internal shut-off valve 4 and the internal vent valve 9 are completely open.

In case of an abnormal gas-turbine 10 shutdown, i.e., a gas turbine 10 abnormal shutdown wherein the loss of flame signal arrives before the first internal shut-off valve 3 and second internal shut-off valve 4 switch closure, the control unit 14 set 106 the at least one variable V to a second value V2 indicating that an abnormal shutdown occurred. In this case, the purge time value RPT2 is estimated by assuming that unburned fuel gas entered inside the exhaust compartment 13, end specifically in the exhaust plenum and in the exhaust ducts. Therefore, in this scenario, no credit purge can be available, and the purge time value RPT2 may be calculated as the time needed to reduce the fuel gas in the exhaust compartment 13 to a value below 25% LEL.

With reference to Fig. 5, the method 100 is also configured for verifying if during the ignition phase of gas-turbine 10, no flame is detected (fail to light condition). In this case, the at least one variable V will be set to a value which indicates that no purge credit is available and the exhaust purge time value RPT1-RPT3 is set 107 to be equal to a third value RPT3, the function of residual exhaust gases inside the combustion system 1, wherein such residual exhaust gases are assumed to be equal to a predefined gas volume.

In fact, if a fail to light occurs, unburned fuel gas may enter the exhaust compartment 13, and specifically the exhaust plenum. In this case, control unit 14, and specifically the safety PLC may order the maximum opening of the metering valve/s 40 to avoid excessive fuel being trapped in the combustion system 11. The value of maximum opening may be evaluated as a function dependent on a maximum value associated with the fuel gas pressure, a minimum value associated with the fuel gas temperature, a maximum value associated with the fuel gas molecular weight, the maximum opening capacity of the metering valve/s 40, and the entire fuel ignition time. The purge time value RPT3 can be determined as the time needed to reduce the fuel gas concentration inside the combustion system 1, and in particular the exhaust compartment 13 below the 25% LEL.

Finally, if during the ignition phase the metering valves 40 open more than the previously identified threshold, the starting-up sequence should be aborted and the purge time may be calculated in the same manner as in case of fail to light. The metering valves 40 opening will be used to compute the fuel gas quantity injected.

In this case amount of fuel gas injected inside the exhaust compartment 13 may be estimated by multiplying the excessive fuel flow with the time for firing plus the time necessary to the system to react to the fail to light.

As already stated above, the purge time value RPT1, RPT2, RPT3 to be set in the different scenarios may be a function of a volume of the combustion system 1. Furthermore, the first value RPT1, the second value RPT2 and the third value RPT3 may be all calculated using the same parameters, and therefore may be the same (as shown in table 1 below).

Specifically, a purge volume may be defined as the total exhaust volumes of the exhaust compartment 13 to be purged each job taking in account the final arrangement and geometric dimensions of the exhaust compartment 13 itself.

The estimate of the total volume of the exhaust compartment 13 may take into account all the partial volumes of the exhaust compartment 13 downstream the turbine 10 discharge section. In case of a combustion system 1 working with a fuel gas lighter than air, the volume to be purged may be:
- in case of a simple cycle without any waste heat recovery unit (WHRU) or heat recovery steam generator (HRSG), with horizontal exhaust ducts and the silencer installed in the horizontal duct, the volume up to the stack, excluding the vertical item, since such gases naturally tend to diffuse upward and thus does not require the purge of the vertical parts;
- in case of a simple cycle (without any WHRU or HRSG) with horizontal exhaust ducts and the silencer installed in the vertical duct, the volume up to the silencer included;
- in case of simple cycle (without any WHRU or HRSG) with vertical exhaust ducts, the volume up to the silencer included; or
- in case of combined cycle (with WHRU or HRSG) with horizontal and vertical exhaust ducts, the volume up to the outlet of the last evaporator section in the HRSG or up to the outlet of the silencer; the choice depends on which element is the last: if the two elements are both installed in the horizontal ducts, the volume to be considered will be up to the stack excluding the vertical item.

The gas turbine 10 discharge section may be defined as the plane located at:
- the exhaust casing flange for gas turbines models with axial exhaust discharge (as shown in Fig. 1); in this case, no gas turbine 10 volumes should be included in the purge volume definition;
- the exhaust casing flange upstream the exhaust plenum for gas turbine 10 models with radial exhaust ducts (vertical/lateral, as shown in Fig. 2); in this case, the gas turbine 10 exhaust plenum volume should be included in the total purge volume definition.

In case of fuel gases heavier than air the purge volume should take into account also the vertical ducts of the exhaust compartment 13.

Furthermore, for the total purge volumes estimation, the exhaust compartment 13 may be divided in suitable partial sections for ease of geometric volumes calculation. The volume calculation may take into account only the empty volume for each section, disregarding the volumes occupied by internal components like noise baffle, deflector or piping. In a typical exhaust system arrangement with HRSG for a gas turbine 10 with radial exhaust ducts, the geometric volumes to be considered may be the volumes for the simple stack and for the stack having the HRSG. In this case, the total exhaust volume to be purged will be given by the sum of the geometric volumes relevant to all the considered section.

Finally, as stated above, the purge time value RPT1, RPT2, RPT3 may be always calculated as the time needed to lower the estimated unburn fuel gases inside the combustion system 1, and in particular the exhaust compartment 13, below a predefined safety threshold, for instance 25% of LEL.

In other words, the purge time value may be defined as the minimum duration of time to reduce the concentration of fuel gas/flammable vapors/hydrocarbon to a safe limit by purging with fresh air the GT exhaust system. $Purging time value = Exchange rate \times \frac{Total Exhaust Volume}{Site Purging Airflow}$

The exchange rate means the minimum number of times that the total exhaust volume should be evacuated to assure a complete purging cycle. The total exhaust volume represents the sum of the exhaust geometric volumes of the gas turbine 10 sections and exhaust compartment 13 sections to be considered, as detailed above. The site purging airflow is given by the fresh air flow delivered by the gas turbine 10 axial compressor rotating at the purge speed, e.g. 1700 rpm or 2200 rpm. In fact, the purging airflow represents the fresh air flow delivered by the axial compressor, and therefore available at the exhaust discharge section, when the gas turbine 10 is operated at purge speed. Given that the axial compressor can be assimilated to a volumetric machine, the airflow delivered by the axial compressor can be calculated as a function of its speed with consequent impact on the purge cycle duration (higher purge speed means higher purge flow, which means shorter purge cycle duration).

Typically, the exhaust purging sequence may be performed at gas turbine 10 crank speed = nominal purge speed. Another aspect that may influence the flow rate of the air available at the turbine exhaust discharge section is the presence of air extractions from the axial compressor (i.e., anti-surge, over boar bleed, bleeding for external auxiliary systems, etc.). The presence of the direct air extractions to the atmosphere may be considered in order to correct the actually available flow rate for the purge sequence.

In case, for a given installation, the purge speed needs to be adjusted outside the range defined above, a close examination of the impacts on rotodynamic behavior and on purging flow and verification of starting system capability should be evaluated on a case by case basis, being adjusted with predetermined corrective coefficients.

In fact, purge time values RPT1, RPT2, RPT3 may be estimated by taking into consideration the different gas turbine 10 exhaust configuration (axial, vertical/lateral with plenum) and the other options in the exhaust system design (simple stack, CHP with heat recovery system, etc.) and in the application (new unit or gas turbine 10 replacement/upgrade in the existing plant). The duration of the purging cycle may also be specifically defined for each job taking in account the final arrangement, the characteristics of the gas turbine 10 and the exhaust compartment 13 thereof, and the fuel gas composition.

### EXAMPLE 1

Is herewith disclosed, as a way of example only, a table comparing the purge time needed for a gas turbine 10 startup using a classic approach, and using a method according to the present invention, wherein the gas turbine 10 has high exhaust mass flow.

**Table 1**

| | **Classic approach** | **Method 100** | | | | |
|---|---|---|---|---|---|---|
| | | Purge credit available | RPT1 | DC LOSS | RPT2 | RPT3 |
| **Total purge time** | 96 min | 0 min | 40 - 52 min | 96 min | 40 - 52 min | 40 - 52 min |

The advantages of using a method 100 according to the present invention are evident in increasing the gas turbine 10 availability.

While aspects of the invention have been described in terms of various specific embodiments, it will be apparent to those of ordinary skill in the art that many modifications, changes, and omissions are possible without departing from the scope of the claims. In addition, unless specified otherwise herein, the order or sequence of any process or method steps may be varied or re-sequenced according to alternative embodiments.

Reference has been made in detail to embodiments of the disclosure, one or more examples of which are illustrated in the drawings. Each example is provided by way of explanation of the disclosure, not limitation of the disclosure. In fact, it will be apparent to those skilled in the art that various modifications and variations can be made in the present disclosure without departing from the scope of the claimed invention, which is defined in the appended claims.

## Claims

1. A method (100) for estimating and setting the exhaust purge time in a combustion system (1) comprising a gas turbine (10) and a fuel gas compartment (11), wherein the method (100) comprises the following steps:
starting-up (101) the turbine (10) of the combustion system (1);
checking (102) the pressure within the fuel gas compartment (11) of the combustion system (1) by at least one pressure detector (5;6)
if the pressure detected within the fuel gas compartment (11) in the checking step (102) is within an operating pressure interval, and if the gas turbine (10) has been shut down at least once,
then the step of reading (103) at least one variable associated with the previous turbine shutdown, is carried out, which indicates if a purge credit is available, wherein if the at least one variable indicates that a purge credit is available, then the step of setting (104) the exhaust purge time to zero is carried out;
else, if the at least one variable indicates that no purge credit is available, then the step of setting (105;106;107;108) the exhaust purge time to a predetermined purge time value is carried out,
**characterized in that** if the at least one variable indicates that no purge credit is available and that the previous shutdown was a normal shutdown,
then the predetermined purge time value is set (105) to a first time to reduce residual exhaust gases inside the combustion system (1) below a safety threshold, wherein the residual exhaust gases are assumed to be equal to a first predetermined gas volume;
else, if the at least one variable indicates that the previous shutdown was not a normal shutdown,
then the predetermined purge time value is set (106) to a second time to reduce residual exhaust gases inside the combustion system (1) below a safety threshold, wherein the residual exhaust gases are assumed to be equal to a second predetermined gas volume.

2. The method of claim 1, wherein the checking step (102) comprises the sub-steps of checking a first internal shut-off valve (3) arranged downstream a fuel gas inlet (7), with reference to the movement of fuel gases to the turbine (10), when in use, and a second internal shut-off valve (4) arranged downstream the first internal shut-off valve (3), by the at least one pressure detector (5,6), and verifying that no leakage is detected.

3. The method of claim 1, wherein the checking step (102) comprises the following sub-steps:
pressurizing (1020), by means of fuel gas entering in the fuel gas compartment (11) from the fuel gas inlet (7), a first volume (15) of the fuel gas compartment (11) between the fuel gas inlet (7) and the first shut-off valve (3), while the first shut-off valve (3) is closed, and verifying that the pressure detected by the at least one pressure detector does not increase above a first pressure limit;
after the pressurizing step (1020), opening (1023) the first shut-off valve (3), while the second shut-off valve (4) is closed; and
after the opening step (1023), closing the first shut-off valve (3) and waiting a predetermined time for verifying that the pressure detected by the at least one pressure detector does not go below a predefined leakage threshold.

4. The method of claim 3, wherein before the opening step (1023) and after the pressurizing step (1020), there is a depressurizing step (1021) of the first volume (15) carried out by opening a warm-up valve (90) until a first pressure detector (5) arranged in the first volume (15) detects a predefined intermediate pressure.

5. The method of claim 1, wherein the checking step (102) comprises checking the fuel-gas flow, flowing through metering valves (40) arranged downstream the second internal shut-off valve (4).

6. The method of claim 1, wherein the at least one variable is calculated during the turbine (10) previous shutdown with the following steps;
shutting down (200) the turbine (10) and closing (201) the first shut-off valve (3) and the second shut-off valve (4);
receiving (202) a signal related to loss of flame;
if the signal related to loss of flame received in the receiving step arrives after closing the first shut-off valve (3) and the second shut-off valve (4),
then checking that the residual fuel-gas inside a second volume of the fuel-gas compartment (16), downstream the first shut-off valve (3) and upstream the second shut-off valve (4), is below a predefined value, wherein:
if the residual fuel-gas checked in the checking step is below the predefined value, then assigning (204) to the at least one variable a value indicating that a purge credit is available;
else, if the residual fuel-gas checked in the checking step is not below the predefined value, then assigning (205) to the at least one variable a value indicating that no purge credit is available and that the shutdown was normal;
else, if the signal related to loss of flame received in the receiving step (202) arrives before closing the first shut-off valve (3) and the second shut-off valve (4),
then a step of assigning (206) to the at least one variable a value indicating that no purge credit is available and that the shutdown was not normal is carried out.

7. The method of claim 6, wherein the checking step comprises the following sub-steps:
with the first shut-off valve (3) and the second shut-off valve (4) closed, opening (2030) an internal vent valve (9) arranged inside a second volume (16) of the fuel-gas compartment (11), for depressurizing, up to a predefined second pressure, the second volume (16) of the fuel-gas compartment (11); and
after the opening sub-step (2030), checking the pressure detected by the second pressure detector (6) and verifying that it is below a second pressure limit, as an indirect measurement of the residual fuel-gas value.

8. The method of claim 1, comprising the step of assigning (208) to the at least one variable a value indicating that no purge credit is available at the next turbine start-up after a predetermined time passed without a purge.

9. The method of claim 1, wherein if the turbine (10) fails to start up, then the at least one variable indicates that no purge credit is available and the exhaust purge time is set (107) to a third time value to reduce residual exhaust gases inside the combustion system (1) below a safety threshold, wherein the residual exhaust gases are assumed to be equal to a third predetermined gas volume.

10. The method of claim 1, wherein if the combustion system (1) is affected by memory loss, then the at least one variable indicates that no purge credit is available and the exhaust purge time is set (108) to a predetermined maximum purge time value.

11. The method of claim 1, wherein in case the turbine (10) is started up for the first time, the exhaust purge time is estimated (109) as being equal to the maximum between a minimum time value and the time needed for insufflating a volume of air equal to an estimated volume of the combustion system (1).

12. A combustion system (1) comprising:
a turbine (10);
a fuel-gas compartment (11), coupled with the turbine (10) for feeding the turbine with fuel gas, wherein the fuel gas compartment (11) comprises
a fuel gas inlet (7) for the fuel gas entering the combustion system (1),
a first internal shut-off valve (3), arranged downstream the fuel gas inlet (7), with reference to the movement of the fuel gas to the turbine (10),
a second internal shut-off valve (4), arranged downstream the first shut-off valve (3),
at least one pressure detector (6) arranged between the first internal shut-off valve (3) and the second internal shut-off valve (4); and
a control unit (14) operatively connected to the turbine (10) and to the fuel-gas compartment (11), wherein the control unit (14) is configured for executing the method of any one of the preceding claims.

13. The combustion system of claim 12,
wherein the fuel gas compartment (11) comprises:
a first pressure detector (5) arranged upstream the first internal shut-off valve (3);
a second pressure detector (6) arranged between the first internal shut-off valve (3) and the second internal shut-off valve (4); and
a warm-up valve (90) arranged upstream the first shut-off valve (3), and connected to the control unit (14); and
wherein the control unit (14) is configured for
pressurizing (1020), by means of fuel gas entering in the fuel gas compartment (11) from the fuel gas inlet (7), a first volume (15) of the fuel gas compartment (11) between the fuel gas inlet (7) and the first shut-off valve (3), while the first shut-off valve (3) is closed, and verifying that the pressure detected by the at least one pressure detector (5) does not increase above a first pressure limit;
after the pressurizing step (1020), depressurizing (1021) the first volume (15) by opening the warm-up valve (90) until a first pressure detector (5) arranged in the first volume (15) detects a predefined intermediate pressure.
after the depressurizing step, opening (1023) the first shut-off valve (3), while the second shut-off valve (4) is closed; and
after the opening step (1023), closing (1025) first shut-off valve (3) and waiting a predetermined time for verifying that the pressure detected by the second pressure detector (6) does not go below a predefined leakage threshold.

14. The combustion system of claim 12, wherein the fuel gas compartment (11) comprises an internal vent valve (9) between the first shut-off valve (3) and the second shut-off valve (4) and connected to the control unit (14).

## Patentansprüche

1. Verfahren (100) zum Schätzen und Einstellen der Abgasspülzeit in einem Verbrennungssystem (1) umfassend eine Gasturbine (10) und einen Brenngasraum (11), wobei das Verfahren (100) die folgenden Schritte umfasst:
Anfahren (101) der Turbine (10) des Verbrennungssystems (1);
Prüfen (102) des Drucks innerhalb des Brenngasraums (11) des Verbrennungssystems (1) durch mindestens einen Druckdetektor (5;6)
wenn der im Prüfschritt (102) innerhalb des Brenngasraums (11) erfasste Druck innerhalb eines Betriebsdruckintervalls liegt, und wenn die Gasturbine (10) mindestens einmal abgeschaltet worden ist,
dann wird der Schritt des Auslesens (103) mindestens einer mit dem vorherigen Abschalten der Turbine verbundenen Variablen ausgeführt, die angibt, ob ein Spülguthaben verfügbar ist, wobei, wenn die mindestens eine Variable angibt, dass ein Spülguthaben verfügbar ist, dann der Schritt des Einstellens (104) der Abgasspülzeit auf null ausgeführt wird;
andernfalls, wenn die mindestens eine Variable angibt, dass kein Spülguthaben verfügbar ist, wird der Schritt des Einstellens (105;106;107;108) der Abgasspülzeit auf einen vorbestimmten Spülzeitwert ausgeführt,
**dadurch gekennzeichnet, dass**, wenn die mindestens eine Variable angibt, dass kein Spülguthaben verfügbar ist und dass das vorherige Abschalten ein normales Abschalten war,
dann wird der vorbestimmte Spülzeitwert auf eine erste Zeit eingestellt (105), um Restabgase innerhalb des Verbrennungssystems (1) unter einen Sicherheitsschwellenwert zu reduzieren, wobei die Restabgase als gleich einem ersten vorbestimmten Gasvolumen angenommen werden;
andernfalls, wenn die mindestens eine Variable angibt, dass das vorherige Abschalten kein normales Abschalten war,
dann wird der vorbestimmte Spülzeitwert auf eine zweite Zeit eingestellt (106), um Restabgase innerhalb des Verbrennungssystems (1) unter einen Sicherheitsschwellenwert zu reduzieren, wobei die Restabgase als gleich einem zweiten vorbestimmten Gasvolumen angenommen werden.

2. Verfahren nach Anspruch 1, wobei der Prüfschritt (102) die Teilschritte des Prüfens eines ersten internen Absperrventils (3), das stromabwärts eines Brenngaseinlasses (7) angeordnet ist, in Bezug auf die Bewegung von Brenngasen zur Turbine (10) im Betrieb, und eines zweiten internen Absperrventils (4), das stromabwärts des ersten internen Absperrventils (3) angeordnet ist, durch den mindestens einen Druckdetektor (5, 6), und des Überprüfens, dass keine Leckage detektiert wird, umfasst.

3. Verfahren nach Anspruch 1, wobei der Prüfschritt (102) die folgenden Teilschritte umfasst:
Druckbeaufschlagen (1020), mittels Brenngas, das von dem Brenngaseinlass (7) in den Brenngasraum (11) eintritt, eines ersten Volumens (15) des Brenngasraums (11) zwischen dem Brenngaseinlass (7) und dem ersten Absperrventil (3), während das erste Absperrventil (3) geschlossen ist, und Überprüfen, dass der durch den mindestens einen Druckdetektor erfasste Druck nicht über einen ersten Druckgrenzwert ansteigt;
nach dem Druckbeaufschlagungsschritt (1020), Öffnen (1023) des ersten Absperrventils (3), während das zweite Absperrventil (4) geschlossen ist; und
nach dem Öffnungsschritt (1023), Schließen des ersten Absperrventils (3) und Abwarten einer vorbestimmten Zeit zum Überprüfen, dass der von dem mindestens einen Druckdetektor erfasste Druck nicht unter einen vorgegebenen Leckageschwellenwert fällt.

4. Verfahren nach Anspruch 3, wobei vor dem Öffnungsschritt (1023) und nach dem Druckbeaufschlagungsschritt (1020) ein Druckentlastungsschritt (1021) des ersten Volumens (15) erfolgt, der durch Öffnen eines Aufwärmventils (90) ausgeführt wird, bis ein in dem ersten Volumen (15) angeordneter erster Druckdetektor (5) einen vorgegebenen Zwischendruck erfasst.

5. Verfahren nach Anspruch 1, wobei der Prüfschritt (102) das Prüfen des Brenngasstroms umfasst, der durch Dosierventile (40) strömt, die stromabwärts des zweiten internen Absperrventils (4) angeordnet sind.

6. Verfahren nach Anspruch 1, wobei die mindestens eine Variable während der vorherigen Abschaltung der Turbine (10) mit den folgenden Schritten berechnet wird;
Abschalten (200) der Turbine (10) und Schließen (201) des ersten Absperrventils (3) und des zweiten Absperrventils (4);
Empfangen (202) eines Signals bezüglich eines Flammenverlusts;
wenn das in dem Empfangsschritt empfangene Signal in Bezug auf den Flammenverlust nach dem Schließen des ersten Absperrventils (3) und des zweiten Absperrventils (4) eintrifft,
dann Prüfen, dass das Restbrenngas innerhalb eines zweiten Volumens der Brenngaskammer (16), stromabwärts des ersten Absperrventils (3) und stromaufwärts des zweiten Absperrventils (4), unter einem vorgegebenen Wert liegt, wobei:
wenn das in dem Prüfschritt geprüfte Restbrenngas unter dem vorgegebenen Wert liegt, dann Zuweisen (204) eines Wertes zu der mindestens einen Variablen, der angibt, dass ein Spülguthaben verfügbar ist;
andernfalls, wenn das in dem Prüfschritt geprüfte Restbrenngas nicht unter dem vorgegebenen Wert liegt, dann Zuweisen (205) eines Wertes zu der mindestens einen Variablen, der angibt, dass kein Spülguthaben verfügbar ist und dass das Abschalten normal war;
andernfalls, wenn das in dem Empfangsschritt (202) empfangene Signal bezüglich des Flammenverlusts vor dem Schließen des ersten Absperrventils (3) und des zweiten Absperrventils (4) eintrifft,
dann wird ein Schritt des Zuweisens (206) eines Wertes zu der mindestens einen Variablen ausgeführt, der angibt, dass kein Spülguthaben verfügbar ist und dass das Abschalten nicht normal war.

7. Verfahren nach Anspruch 6, wobei der Prüfschritt die folgenden Teilschritte umfasst:
bei geschlossenem ersten Absperrventil (3) und zweiten Absperrventil (4), Öffnen (2030) eines internen Entlüftungsventils (9), das innerhalb eines zweiten Volumens (16) des Brenngasraums (11) angeordnet ist, zum Druckentlasten des zweiten Volumens (16) des Brenngasraums (11) bis auf einen vorgegebenen zweiten Druck; und
nach dem Öffnungsteilschritt (2030), Prüfen des durch den zweiten Druckdetektor (6) erfassten Drucks und Überprüfen, dass dieser unter einem zweiten Druckgrenzwert liegt, als eine indirekte Messung des Restbrenngaswerts.

8. Verfahren nach Anspruch 1, umfassend den Schritt des Zuweisens (208) eines Wertes zu der mindestens einen Variablen, der angibt, dass bei dem nächsten Anfahren der Turbine kein Spülguthaben verfügbar ist, nachdem eine vorbestimmte Zeit ohne eine Spülung vergangen ist.

9. Verfahren nach Anspruch 1, wobei, wenn die Turbine (10) nicht anfährt, dann die mindestens eine Variable angibt, dass kein Spülguthaben verfügbar ist, und die Abgasspülzeit auf einen dritten Zeitwert eingestellt wird (107), um Restabgase innerhalb des Verbrennungssystems (1) unter einen Sicherheitsschwellenwert zu reduzieren, wobei die Restabgase als gleich einem dritten vorbestimmten Gasvolumen angenommen werden.

10. Verfahren nach Anspruch 1, wobei, wenn das Verbrennungssystem (1) von einem Speicherverlust betroffen ist, dann die mindestens eine Variable angibt, dass kein Spülguthaben verfügbar ist, und die Abgasspülzeit auf einen vorbestimmten maximalen Spülzeitwert eingestellt wird (108).

11. Verfahren nach Anspruch 1, wobei, falls die Turbine (10) zum ersten Mal angefahren wird, die Abgasspülzeit als gleich dem Maximum zwischen einem minimalen Zeitwert und der Zeit geschätzt wird (109), die zum Einblasen eines Luftvolumens benötigt wird, das gleich einem geschätzten Volumen des Verbrennungssystems (1) ist.

12. Verbrennungssystem (1), umfassend:
eine Turbine (10);
eine Brenngaskammer (11), die mit der Turbine (10) gekoppelt ist, um die Turbine mit Brenngas zu versorgen, wobei die Brenngaskammer (11)
einen Brenngaseinlass (7) für das in das Verbrennungssystem (1) eintretende Brenngas,
ein erstes internes Absperrventil (3), das stromabwärts des Brenngaseinlasses (7) angeordnet ist, bezogen auf die Bewegung des Brenngases zur Turbine (10),
ein zweites internes Absperrventil (4), das stromabwärts des ersten Absperrventils (3) angeordnet ist,
mindestens einen Druckdetektor (6), der zwischen dem ersten internen Absperrventil (3) und dem zweiten internen Absperrventil (4) angeordnet ist; und
eine Steuereinheit (14), die betriebsfähig mit der Turbine (10) und mit dem Brenngasraum (11) verbunden ist, wobei die Steuereinheit (14) konfiguriert ist, das Verfahren nach einem der vorstehenden Ansprüche auszuführen, umfasst.

13. Verbrennungssystem nach Anspruch 12,
wobei der Brenngasraum (11) umfasst:
einen ersten Druckdetektor (5), der stromaufwärts des ersten internen Absperrventils (3) angeordnet ist;
einen zweiten Druckdetektor (6), der zwischen dem ersten internen Absperrventil (3) und dem zweiten internen Absperrventil (4) angeordnet ist; und
ein Aufwärmventil (90), das stromaufwärts des ersten Absperrventils (3) angeordnet und mit der Steuereinheit (14) verbunden ist; und
wobei die Steuereinheit (14) konfiguriert ist zum:
Druckbeaufschlagen (1020), mittels Brenngas, das aus dem Brenngaseinlass (7) in den Brenngasraum (11) eintritt, eines ersten Volumens (15) des Brenngasraums (11) zwischen dem Brenngaseinlass (7) und dem ersten Absperrventil (3), während das erste Absperrventil (3) geschlossen ist, und Überprüfen, dass der durch den mindestens einen Druckdetektor (5) erfasste Druck nicht über einen ersten Druckgrenzwert ansteigt;
nach dem Druckbeaufschlagungsschritt (1020), Druckentlasten (1021) des ersten Volumens (15) durch Öffnen des Aufwärmventils (90), bis ein in dem ersten Volumen (15) angeordneter erster Druckdetektor (5) einen vorgegebenen Zwischendruck erfasst.
nach dem Druckentlastungsschritt, Öffnen (1023) des ersten Absperrventils (3), während das zweite Absperrventil (4) geschlossen ist; und
nach dem Öffnungsschritt (1023), Schließen (1025) des ersten Absperrventils (3) und Abwarten einer vorbestimmten Zeit, um zu überprüfen, dass der durch den zweiten Druckdetektor (6) erfasste Druck nicht unter einen vorgegebenen Leckageschwellenwert fällt.

14. Verbrennungssystem nach Anspruch 12, wobei der Brenngasraum (11) ein internes Entlüftungsventil (9) zwischen dem ersten Absperrventil (3) und dem zweiten Absperrventil (4) umfasst, das mit der Steuereinheit (14) verbunden ist.

## Revendications

1. Procédé (100) permettant d'estimer et de régler le temps de purge d'échappement dans un système de combustion (1) comprenant une turbine à gaz (10) et un compartiment de gaz combustible (11), dans lequel le procédé (100) comprend les étapes suivantes :
démarrage (101) de la turbine (10) du système de combustion (1) ;
contrôle (102) de la pression au sein du compartiment de gaz combustible (11) du système de combustion (1) par au moins un détecteur de pression (5;6)
si la pression détectée au sein du compartiment de gaz combustible (11) dans l'étape de contrôle (102) est au sein d'un intervalle de pression de fonctionnement, et si la turbine à gaz (10) a été arrêtée au moins une fois,
alors l'étape de lecture (103) d'au moins une variable associée à l'arrêt de turbine précédent, est effectuée, celle-ci indiquant si un crédit de purge est disponible, dans lequel si l'au moins une variable indique qu'un crédit de purge est disponible, alors l'étape de réglage (104) du temps de purge d'échappement à zéro est effectuée ;
autrement, si l'au moins une variable indique qu'aucun crédit de purge n'est disponible, alors l'étape de réglage (105;106;107;108) du temps de purge d'échappement à une valeur de temps de purge prédéterminée est effectuée,
**caractérisé en ce que** si l'au moins une variable indique qu'aucun crédit de purge n'est disponible et que l'arrêt précédent a été un arrêt normal,
alors la valeur de temps de purge prédéterminée est réglée (105) sur un premier temps pour réduire les gaz d'échappement résiduels à l'intérieur du système de combustion (1) en dessous d'un seuil de sécurité, dans lequel les gaz d'échappement résiduels sont supposés être égaux à un premier volume de gaz prédéterminé ;
autrement, si l'au moins une variable indique que l'arrêt précédent n'a pas été un arrêt normal,
ensuite la valeur de temps de purge prédéterminée est réglée (106) sur un deuxième temps pour réduire les gaz d'échappement résiduels à l'intérieur du système de combustion (1) en dessous d'un seuil de sécurité, dans lequel les gaz d'échappement résiduels sont supposés être égaux à un deuxième volume de gaz prédéterminé.

2. Procédé selon la revendication 1, dans lequel l'étape de contrôle (102) comprend les sous-étapes de vérification d'une première vanne d'arrêt interne (3) agencée en aval d'une entrée de gaz combustible (7), en référence au mouvement de gaz combustibles vers la turbine (10), en cours d'utilisation, et d'une seconde vanne d'arrêt interne (4) agencée en aval de la première vanne d'arrêt interne (3), par l'au moins un détecteur de pression (5, 6), et de vérification qu'aucune fuite n'est détectée.

3. Procédé selon la revendication 1, dans lequel l'étape de contrôle (102) comprend les sous-étapes suivantes :
pressurisation (1020), au moyen de gaz combustible entrant dans le compartiment de gaz combustible (11) en provenance de l'entrée de gaz combustible (7), d'un premier volume (15) du compartiment de gaz combustible (11) entre l'entrée de gaz combustible (7) et la première vanne d'arrêt (3), alors que la première vanne d'arrêt (3) est fermée, et vérification que la pression détectée par l'au moins un détecteur de pression n'augmente pas au-dessus d'une première limite de pression ;
après l'étape de pressurisation (1020), ouverture (1023) de la première vanne d'arrêt (3), alors que la seconde vanne d'arrêt (4) est fermée ; et
après l'étape d'ouverture (1023), fermeture de la première vanne d'arrêt (3) et attente pendant un temps prédéterminé pour vérifier que la pression détectée par l'au moins un détecteur de pression ne descend pas sous un seuil de fuite prédéfini.

4. Procédé selon la revendication 3, dans lequel avant l'étape d'ouverture (1023) et après l'étape de pressurisation (1020), il y a une étape de dépressurisation (1021) du premier volume (15) effectuée en ouvrant une vanne de préchauffage (90) jusqu'à ce qu'un premier détecteur de pression (5) agencé dans le premier volume (15) détecte une pression intermédiaire prédéfinie.

5. Procédé selon la revendication 1, dans lequel l'étape de contrôle (102) comprend le contrôle de l'écoulement de gaz combustible, s'écoulant à travers des vannes de dosage (40) agencées en aval de la seconde vanne d'arrêt interne (4).

6. Procédé selon la revendication 1, dans lequel l'au moins une variable est calculée pendant l'arrêt précédent de la turbine (10) avec les étapes suivantes ;
arrêt (200) de la turbine (10) et fermeture (201) de la première vanne d'arrêt (3) et de la seconde vanne d'arrêt (4) ;
réception (202) d'un signal se rapportant à une perte de flamme ;
si le signal se rapportant à une perte de flamme reçu dans l'étape de réception arrive après la fermeture de la première vanne d'arrêt (3) et de la seconde vanne d'arrêt (4),
le contrôle alors que le gaz combustible résiduel à l'intérieur d'un second volume du compartiment de gaz combustible (16), en aval de la première vanne d'arrêt (3) et en amont de la seconde vanne d'arrêt (4), est inférieur à une valeur prédéfinie, dans lequel :
si le gaz combustible résiduel contrôlé dans l'étape de contrôle est inférieur à la valeur prédéfinie, l'attribution (204) alors à l'au moins une variable d'une valeur indiquant qu'un crédit de purge est disponible ;
autrement, si le gaz combustible résiduel vérifié dans l'étape de contrôle n'est pas inférieur à la valeur prédéfinie, l'attribution (205) alors à l'au moins une variable d'une valeur indiquant qu'aucun crédit de purge n'est disponible et que l'arrêt a été normal ;
autrement, si le signal se rapportant à une perte de flamme reçu dans l'étape de réception (202) arrive avant la fermeture de la première vanne d'arrêt (3) et de la seconde vanne d'arrêt (4),
alors, une étape d'attribution (206) à l'au moins une variable d'une valeur indiquant qu'aucun crédit de purge n'est disponible et que l'arrêt n'a pas été normal est effectuée.

7. Procédé selon la revendication 6, dans lequel l'étape de contrôle comprend les sous-étapes suivantes :
avec la première vanne d'arrêt (3) et la seconde vanne d'arrêt (4) fermées, l'ouverture (2030) d'une vanne de mise à l'air interne (9) agencée à l'intérieur d'un second volume (16) du compartiment de gaz combustible (11), pour une dépressurisation, jusqu'à une seconde pression prédéfinie, du second volume (16) du compartiment de gaz combustible (11) ; et
après la sous-étape d'ouverture (2030), le contrôle de la pression détectée par le second détecteur de pression (6) et la vérification qu'elle est inférieure à une seconde limite de pression, en tant que mesure indirecte de la valeur de gaz combustible résiduel.

8. Procédé selon la revendication 1, comprenant l'étape d'attribution (208) à l'au moins une variable d'une valeur indiquant qu'aucun crédit de purge n'est disponible au prochain démarrage de turbine après qu'un temps prédéterminé s'est écoulé sans purge.

9. Procédé selon la revendication 1, dans lequel si la turbine (10) ne parvient pas à démarrer, alors l'au moins une variable indique qu'aucun crédit de purge n'est disponible et le temps de purge d'échappement est réglé (107) sur une troisième valeur de temps pour réduire les gaz d'échappement résiduels à l'intérieur du système de combustion (1) en dessous d'un seuil de sécurité, dans lequel les gaz d'échappement résiduels sont supposés être égaux à un troisième volume de gaz prédéterminé.

10. Procédé selon la revendication 1, dans lequel si le système de combustion (1) est affecté par une perte de mémoire, alors l'au moins une variable indique qu'aucun crédit de purge n'est disponible et le temps de purge d'échappement est réglé (108) sur une valeur de temps de purge maximale prédéterminée.

11. Procédé selon la revendication 1, dans lequel dans un cas où la turbine (10) est démarrée pour la première fois, le temps de purge d'échappement est estimé (109) comme étant égal au maximum entre une valeur de temps minimale et le temps nécessaire pour insuffler un volume d'air égal à un volume estimé du système de combustion (1).

12. Système de combustion (1) comprenant :
une turbine (10) ;
un compartiment de gaz combustible (11), accouplé à la turbine (10) permettant d'alimenter la turbine en gaz combustible, dans lequel le compartiment de gaz combustible (11) comprend
une entrée de gaz combustible (7) pour permettre au gaz combustible d'entrer dans le système de combustion (1),
une première vanne d'arrêt interne (3), agencée en aval de l'entrée de gaz combustible (7), en référence au mouvement du gaz combustible vers la turbine (10),
une seconde vanne d'arrêt interne (4), agencée en aval de la première vanne d'arrêt (3),
au moins un détecteur de pression (6) agencé entre la première vanne d'arrêt interne (3) et la seconde vanne d'arrêt interne (4) ; et
une unité de commande (14) connectée fonctionnellement à la turbine (10) et au compartiment de gaz combustible (11), dans lequel l'unité de commande (14) est configurée pour l'exécution du procédé selon l'une quelconque des revendications précédentes.

13. Système de combustion selon la revendication 12,
dans lequel le compartiment de gaz combustible (11) comprend :
un premier détecteur de pression (5) agencé en amont de la première vanne d'arrêt interne (3) ;
un second détecteur de pression (6) agencé entre la première vanne d'arrêt interne (3) et la seconde vanne d'arrêt interne (4) ; et
une vanne de préchauffage (90) agencée en amont de la première vanne d'arrêt (3), et connectée à l'unité de commande (14) ; et
dans laquelle l'unité de commande (14) est configurée pour
la pressurisation (1020), au moyen de gaz combustible entrant dans le compartiment de gaz combustible (11) en provenance de l'entrée de gaz combustible (7), d'un premier volume (15) du compartiment de gaz combustible (11) entre l'entrée de gaz combustible (7) et la première vanne d'arrêt (3), alors que la première vanne d'arrêt (3) est fermée, et la vérification que la pression détectée par l'au moins un détecteur de pression (5) n'augmente pas au-dessus d'une première limite de pression ;
après l'étape de pressurisation (1020), la dépressurisation (1021) du premier volume (15) en ouvrant la vanne de préchauffage (90) jusqu'à ce qu'un premier détecteur de pression (5) agencé dans le premier volume (15) détecte une pression intermédiaire prédéfinie.
après l'étape de dépressurisation, l'ouverture (1023) de la première vanne d'arrêt (3), alors que la seconde vanne d'arrêt (4) est fermée ; et
après l'étape d'ouverture (1023), la fermeture (1025) de la première vanne d'arrêt (3) et l'attente pendant un temps prédéterminé pour vérifier que la pression détectée par le second détecteur de pression (6) ne descend pas sous un seuil de fuite prédéfini.

14. Système de combustion selon la revendication 12, dans lequel le compartiment de gaz combustible (11) comprend une vanne de mise à l'air interne (9) entre la première vanne d'arrêt (3) et la seconde vanne d'arrêt (4) et connectée à l'unité de commande (14).
